# EUROPEAN PATENT SPECIFICATION

(11) **EP 1 696 749 B1**
(45) Date of publication and mention of the grant of the patent: **02.04.2008**
(21) Application number: 04803327.8
(22) Date of filing: 26.11.2004
(51) Int. Cl.: A23P 1/06, A23L 1/00, A23L 2/39, A23J 3/00, A23L 1/05

(54) **BEVERAGES AND THEIR PREPARATION**
GETRÄNKE UND IHRE HERSTELLUNG
BOISSONS ET LEUR PREPARATION

(30) Priority: 23.12.2003 GB 0329833
(43) Date of publication of application: 06.09.2006
(73) Proprietor: Unilever Naamloze Vennootschap, 3013 AL Rotterdam (NL); UNILEVER PLC, London, Greater London EC4P 4BQ (GB)
(72) Inventor: GREBENKAMPER, Kai, UNILEVER R & D VLAARDINGEN, NL-3133 AT Vlaardingen (NL); KOHLUS, Reinhard, Knorrstrasse 1, 74074 Heilbronn (DE); VELIKOV, Krassimir P., UNILEVER R & D VLAARDINGEN, NL-3133 AT Vlaardingen (NL)
(74) Representative: Wurfbain, Gilles L.
(86) International application number: PCT/EP2004/013502
(87) International publication number: WO 2005/063058

(56) References cited:
- WO-A-20/04086879
- US-A- 5 145 697
- US-A1- 2003 124 226
- US-A1- 2003 185 941
- PATENT ABSTRACTS OF JAPAN vol. 010, no. 131 (C-346), 15 May 1986 (1986-05-15) & JP 60 256372 A (FUJI SEIYU KK; others: 01), 18 December 1985 (1985-12-18)
- PATENT ABSTRACTS OF JAPAN vol. 2002, no. 11, 6 November 2002 (2002-11-06) & JP 2002 186431 A (SANEI GEN FFI INC), 2 July 2002 (2002-07-02)

## Description

### Field of the Invention

The present invention relates to a process for making precursors for beverages having a pH neutral or mildly acidic. The precursors are in powder form for conversion into a drink by the addition of a liquid.

### Background of the Invention

At neutral or mildly acidic pH, protein used in instant powdered drinks tends to sediment, due to poor dispersibility, leading to phase separation and consumer perception of chalkiness and sandiness. In order to produce stable acidic foods, different stabilisers have been used to prevent coagulation and precipitation of protein particles. At higher concentrations of stabiliser, unwanted effects such as phase separation, precipitation, etc are observed. In addition, all stabilisers increase viscosity when used, and are therefore not suited to the tastes of today's consumers who prefer low viscosity and light food textures.

It is also known to granulate powdered soybean protein in a fluidized bed agglomerator whilst spraying-on an aqueous solution of carbohydrate, as disclosed in US-A-2002/146487 and US-A-2003/124226.

Stabilisers such as carrageenan, sodium carboxymethylcellulose (CMC-Na), propylene glycol alginate ester (PGA), water-soluble soybean polysaccharides (SSP), and beet-derived pectin (BD-pectin) have normally been used in ready-to-drink products, either alone or in combination (including mixtures with other polysaccharides) for production of ready-to-drink acidic protein foods in order to prevent phase separation with resultant chalkiness and sandiness caused by protein particles.

Thus, there remains a need to provide beverages around neutral pH or mildly acidic pH, which are either in liquid, drinkable form or which can be made into a drinkable composition by dispersing in a liquid, the drinkable compositions having a low viscosity, preferably in the range of 5 to 50 mPas at a shear rate of 0.1 s⁻¹ or at 10 s⁻¹ beverages avoid the drawbacks of phase separation, chalkiness and sandiness due to the protein particles.

US 5,145,697 discloses a process for preparing a powdered yoghurt composition comprising mixing by spray drying or dry blending a formulation consisting essentially of Lactobacillus yoghurt culture,_up to 45 wt.% of yoghurt solids, From 0.1-20 wt.%of a mixture of highly purified locust bean gum and xanthan gum as a first gel system and at least one additional gel system. The total amount of liquid ingredients in these formulations is_very low, containing more than 50 wt.% of dry matter before mixing in the spray dryer. US 5,145,679 thus does not disclose a process employing one or more slurries.

### Summary of the Invention

According to a first aspect of the invention there is provided a process for making a powdered precursor for preparing a neutral or mildly acidic beverage, having a pH of from 5.5 to 8, upon admixture of the powdered precursor with a liquid, the process comprising the steps:
(a) preparing a first slurry comprising a protein source and a polysaccharide stabiliser selected from locust bean gum, tamarind seed polysaccharide, gellan gum, xanthan gum, guar gum, tara gum, gum arable, kalaya gum, carrageenan, agar soybean polysaccharides and mixtures thereof, said first slurry having a neutral or mildly acidic pH of_from 5.5 to 8,;
(b) adjusting the pH of the first slurry, if necessary, to a value in the range of from 5.5 to 7.5, preferably from 6 to 7.5, more preferably from 6 to 7; and
(c) spray drying the first slurry having a dry matter content of 10-50% (m/m) after step (a) or step (b).

According to a second aspect of the invention there is an acidic beverage made by the admixture of a liquid, preferably an aqueous liquid and a powdered precursor made by the process of the first aspect of the invention. An aqueous liquid is one which contains at least some water, preferably at least 10%, more preferably at least 25%, most preferably at least 50% by weight of water. The term also includes substantially pure water such as tap water.

In a particularly preferred embodiment, the inventors have ground that the above-mentioned problems can be overcome by spray drying of solutions of proteins and stabilisers at nearly neutral or mildly acidic pH.

### Detailed Description of the Invention

The beverage powder precursors must be mixed with a liquid in order to form a composition which is suitable for a consumer to drink. Any suitable liquid can be used, but preferred examples are water and milk. "Milk" also includes flavoured milk drinks.

Preferably a second slurry is prepared comprising the protein source, a third slurry is prepared comprising the polysaccharide stabiliser and the second and third slurries are admixed to provide said first slurry.

As used herein, the term "neutral or mildly acidic" preferably means a pH from 6 to 7. In any range wherein the lower value is "from 6", this may be replaced by "from more than 6" or by "from 6.00001" or "from 6.01".

If the first slurry has a pH range outside the target range of from 6 to 7.5 or outside the preferred target range of from 6 to 7, then before spray drying in step (c), in step (b) its pH is adjusted by conventional means.

### The Protein Source

The protein source may comprise any specific type of protein, e.g. animal, in particular dairy protein, or plant protein. Preferably the protein source provides at least some plant protein, for example soy protein, pea protein or lupin protein, or mixtures thereof. These proteins can be intact or hydrolysed, and can be used separately or in combination with each other.

The total amount of protein to be used may be generally about 0.5 to 10 wt%, preferably 0.5 to 4 wt%, and preferably around 2.7 % wt (e.g. 4 g in a 150g serving) with respect to the final product.

In relation to the first slurry, the amount of protein source in the second slurry could for example be from 5 to 20wt%.

### The Polysaccharide Stabiliser

Polysaccharide stabilizers in accordance with the invention are selected from locust bean gum, tamarind seed polysaccharide, gellan gum, xanthan gum, guar gum, tara gum, gum arabic, kalaya gum, carrageenan, agar soybean polysaccharides and mixtures thereof.

One or more auxiliary non-polysacccharide stabilisers may be used in addition to the polysaccharide stabiliser(s). In particular, preferred auxiliary stabilisers are glycol alginate esters, methoxy pectin (HM-pectin), sodium carboxymethylcellulose (CMC-Na), propylene glycol alginate ester (PGA), and beet-derived pectin (BD-pectin). These may be used alone or in combination. The most preferred stabilisers are guar gums.

The amount of the stabiliser to be used may be generally about 0.05-10 % wt, and preferably 0.05 - 2 wt%, with respect to the final beverage product, but these ranges do not restrict the scope of the invention because they may vary depending on differences in the protein concentration. The weight ratio of protein:stabiliser is preferably from 5:1 to 50:1 more preferably from 10:1 to 30:1.

The amount of stabiliser in the first slurry is preferably from 0.02 to 20 wt%, e.g. 5 to 20 wt%.

With regard to the third slurry, the amount of stabiliser in the third slurry is preferably from 0.1 to 20 wt%, preferably from 0.1 to 3 wt%.

### Carbohydrate

Preferably, carbohydrate is included in the first slurry, most preferably introduced via the protein source-containing second slurry. Preferred carbohydrates include sugars, starches, and maltodextrin.

### Other Ingredients

The powder preferably further contains emulsifier, organic acid (such as lactic, malic or citric) and oil fat and is fortified with minerals, vitamins, etc. Once dispersed in a liquid such as water or milk, the drink is preferably stable against coagulation and phase separation for at least 30 minutes.

### Product Form

The powdered precursor may be one adapted to make any desired neutral or mildly acidic beverages, upon addition of a suitable liquid such as water or milk.

For the spray drying operation, the feed may be a stable solution of the ingredients with a dry matter content between 10 and 50%, preferably between 30 and 40% (m/m). This slurry is spray dried in a so-called spray-drier, resulting in fine particulate matter. A spray dryer is a system where the feed liquid is atomised by means of any type of atomiser, i.e. rotary, two or one phase nozzle, and subsequently dried to from particulate matter. Where the particle size is between 5 and 400 µm, eg between 5 and 100 µm. To produce a dry powder, the spray tower is preferably operated at a temperature of from 150 to 250°C, depending on the dry matter content and tower loading (mass flow ratio slurry to air). The resulting powder will be typically hydrophobic. Due to its fineness and hydrophobicity the material is typically difficult to disperse in water without lump formation. An additional agglomeration or granulation step increases the particle size of each particle. The initial particle will have a d_{4,3} average particle diameter of from 5 µm to 100 µm, e.g. from 5µm to 35 µm whereas the preferred d_{4,3} average particle size ex granulator lies preferably between 50 and 600 µm, more preferably between 150 and 400 µm. This improve the dispersibility so far that it can be easily use in a powdered drink mix, where the spray-dried powder is used, in a mixture with other powders. The agglomeration preferably takes place in a fluid bed type of agglomerator, like a Fielder-Aeromatic type. The binder fluid is preferably plain water. It is advantageous to agglomerate a mixture of the spray-dried material with a carbohydrate like sucrose or maltodextrin or an easily dissolving salt. Alternatively any other type of agglomerator can be used, e.g.:
- high shear mixer granulator e.g. Schugi type granulator or Loedige ploughshare type,
- pressure granulators, e.g. Bepex basket extruder type granulators, or
- steam granulators.

The most favourable technique is the use of a combined spray-drier/fluidised bed system, where the powder from the spray drier is directly granulated. Such a system would be for example a Fluidized Spray Dryer or a Multistage Spray Dryer form GEA Niro A/S. The agglomeration could be just due to the remaining cohesiveness of the powder due to steam treatment or water spray on, with or without addition of easily water soluble material as binder. Such material would be carbohydrates, salts or polymers known as binder.

The addition of lecithin can improve the wetability and dispersability of the powder.

The present invention will now be explained in more detail by way of the following non-limiting examples. Throughout these examples, the parts and percentages are based on weight unless otherwise specified.

### Examples

As analytical methods viscosimetry, particle sizing and phase separation measurements were used. The used methods will be explained in the following chapter.

The viscosity was tested in a cone-plate geometry of a rotational rheometer. Temperature was set to 20°C. The data are taken from the down curve of a flow curve hysteresis. 10 1/s and 50 1/s were chosen as relevant shear rates.

The stability of the beverages was tested by measuring the phase-separated volume in a cylinder as well as visually. When visually clear flocs were determined the system was classified as unstable.

The surface weighted volume mean diameters D3,2 and D4,3 of the particles in the beverage were determined by laser diffraction to get a value for sandiness.

The amount of unstable dispersed mater was measured by centrifugation of the final product for 20 minutes at 2800 g and 20°C. The percentage of the sediment (sediment/total mass x 100) was measured after 5 minutes of dripping out the water.

### Examples 1 - 43

These examples comprise, respectively, preparation of four powdered beverage precursors by spray drying and agglomeration.

The used material was a standard spray dried skim milk powder as source for a milk protein. The used spray dried was in this case a Niro Mobile Minor. The soy protein originates from a soy protein isolate: FXP 219 D ex Solae, as pea protein Pisane HD NO5 ex Cosucrua was used. The stabiliser are: k-Carragenan (Genugel X-0909 ex CP Kelco), Vidocreme A type of guar gum ex Unipektin (guar). The used maltodextrin is a DE 12 maltodextrin ex Rouquette (Glucidex IT 12).

**Table 1: Examples with different proteins and stabilisers.**

| Example | | 1 | 2 | 3 |
|---|---|---|---|---|
| Protein source | | soy | pea | soy/SMP |
| Type | | k-Carraghenan | Guar | Guar |
| Protein powder | SMP | 0.0% | 0.0% | 16.9% |
| | Soy | 30.0% | 22.4% | 28.7% |
| | Pea | 0.0% | 0.0% | 0.0% |
| Maltodextrin | MD12 | 69.4% | 76.0% | 52.8% |
| Citric acid | CA | 0.0% | 0.0% | 0.0% |
| Biopolymer | Stabiliser | 0.6% | 2.0% | 1.6% |
| T in | [°C] | 159 | 161 | 160 |
| T out | [°C] | 83 | 81.9 | 80 |
| Total solids content in final product | % | 10% | 20% | 20% |
| pH | | 7.02 | 5.89 | 6.7 |
| D3,2 wet 5 min. | micron | 0.26 | 20.7 | 0.35 |
| D4,3 wet 5 min. | micron | 9.4 | 50 | 58.3 |
| Phase separation 15 min. | % | 0 | 0 | 0 |
| Stable after 15min. | | yes | yes | yes |
| Phase separation 45 min. | % | 0 | 1 | 0 |
| Stable after 45min. | | yes | yes | yes |
| eta 10 1/sec. 5min | mPas | 28 | 35 | 31 |
| eta 50 1/sec. 5min | mPas | 22 | 34 | 29 |
| Centrifugation | % | 13.6 | 35 | 7.7 |

Example 3 is agglomerated in a so-called multistage drier, where a fluid bed is integrated in the spray tower. It was possible to disperse the agglomerated powder by adding it to water and by stirring the mass for 20 seconds with a spoon. This shows that the powder has good instant properties. The non-agglomerated samples (1 and 2) showed less ideal instant properties and they were dispersed shortly by a blender type of equipment for 15 sec.

Reference samples were produced for comparison to the above examples.

**Table 2: Reference samples**

| Example | | Ref 1 | Ref 2 | Ref 3 | Ref 4 |
|---|---|---|---|---|---|
| Protein source | | Soy | Soy | Pea/Guar | Soy/Guar |
| Protein powder | SMP | 0.0% | 0.0% | 0.0% | 0.0% |
| | Soy | 30.0% | 30.0% | 0.0% | 30.0% |
| | Pea | 0.0% | 0.0% | 25.0% | 0.0% |
| Maltodextrin | MD12 | 70.0% | 67.0% | 75.0% | 70.0% |
| Citric acid | CA | 0.0% | 3.0% | 0.0% | 2.0% |
| Biopolymer | | 0.00% | 0.0% | 2.00% | 2.00% |
| Total solids content in final product | % | 20.0% | 20.0% | 20.0% | 20.0% |
| pH | | 7.08 | 5.5 | 6.01 | 6.99 |
| D3,2 wet 5 min. | micron | 13.3 | 5.5 | 27.1 | 0.7 |
| D4,3 wet 5 min. | micron | 21.7 | 25.5 | 85 | 149.6 |
| Phase separation 15 min. | % | 1 | 0 | 0 | 1 |
| Stable after 15min. | | yes | slightly flocculated | yes | yes |
| Phase separation 45 min. | % | 10 | 0.5 | 2 | 10 |
| Stable after 45min. | | slightly flocculated | slightly flocculated | yes | slightly flocculated |
| eta 10 1/sec. 5min | mPas | 9.5 | 58 | 61 | 246 |
| eta 50 1/sec. 5min | mPas | 10.5 | 29 | 61 | 360 |
| centrifugation | % | 19.5 | 36.7 | 32.9 | 6.6 |

## Claims

1. A process for making a powdered precursor for preparing a neutral or mildly acidic beverage, having a pH of from 5.5 to 8, upon admixture of the powdered precursor with a liquid, the process comprising the steps:
(a) preparing a first slurry comprising a protein source and a polysaccharide stabilizer selected from locust bean gum, tamarind seed polysaccharide, gellan gum, xanthan gum, guar gum, tara gum, gum arabic, kalaya gum, carrageenan, agar soybean polysaccharides and mixtures thereof, said first slurry having a neutral or mildly acidic pH of from 5.5 to 8;
(b) adjusting the pH of the first slurry, if necessary, to a value in the range of from 5.5 to 7.5, preferably from 6 to 7.5, more preferably from 6 to 7; and
(c) spray drying the first slurry having a dry matter content of 10-50% (m/m) after step (a) or step (b).

2. A process according to claim 1, wherein a second slurry is prepared comprising the protein source, a third slurry is prepared comprising the stabiliser and the second and third slurries are then mixed to form said first slurry.

3. A process according to either preceding claim, wherein carbohydrate is added to at least one slurry, preferably the second slurry as recited in claim 2.

4. A process according to any preceding claim, further comprising the step of subjecting the slurry or any or all slurries to a heat treatment, preferably in the range of from 40°C to 80°C.

5. A process according to any preceding claim, further comprising the step of homogenising the slurry or any or all of the slurries.

6. A process according to any preceding claim, further comprising agglomerating the spray dried product of step (c).

7. A process according to any preceding claim, wherein in step (a) the first slurry has a pH above the isoelectric point of the protein, preferably a pH above 6.

8. A process according to claim 2, wherein the stabiliser in the third slurry is neutral or is negatively charged.

9. A process according to any preceding claim, wherein the protein source comprises a plant protein, animal protein or mixtures thereof.

10. A process according to claim 9, wherein the plant protein is selected from soy protein, pea protein or lupin protein or mixtures thereof, and/or the animal protein is selected from dairy protein.

11. A process according to claim 2, wherein the amount of stabiliser in the third slurry is from 0.01 to 20 wt %, preferably from 0.1 to 20 wt%.

12. A process according to any preceding claim wherein in step (d) one or more further ingredients are added to the mixture of slurries, these ingredients preferably being selected from fat, emulsifiers and organic acids.

## Patentansprüche

1. Verfahren zur Herstellung eines pulverförmigen Vorläufers zur Zubereitung eines neutralen oder mild sauren Getränks, das einen pH von 5,5 bis 8 hat, durch Mischen des pulverförmigen Vorläufers mit einer Flüssigkeit, wobei das Verfahren die folgenden Schritte umfasst:
(a) Herstellen einer ersten Aufschlämmung, die eine Proteinquelle und einen Polysaccharid-Stabilisator, ausgewählt aus Johannisbrotgummi, Tamarindensamen-Polysaccharid, Gellangummi, Xanthangummi, Guargummi, Taragummi, Gummi arabicum, Kalayagummi, Carrageenan, Agar, Sojabohnen-Polysacchariden und Gemischen davon, umfasst, wobei die erste Aufschlämmung einen neutralen oder mild sauren pH von 5,5 bis 8 hat;
(b) Einstellen des pH der ersten Aufschlämmung, wenn erforderlich, auf einen pH-Wert im Bereich von 5,5 bis 7,5, vorzugsweise von 6 bis 7,5, bevorzugter von 6 bis 7, und
(c) Sprühtrocknen der ersten Aufschlämmung, die einen Trockensubstanzgehalt von 10-50 % (M/M) hat, nach Schritt (a) oder Schritt (b).

2. Verfahren nach Anspruch 1, wobei eine zweite Aufschlämmung hergestellt wird, die die Proteinquelle umfasst, eine dritte Aufschlämmung hergestellt wird, die den Stabilisator umfasst, und die zweite und die dritte Aufschlämmung dann unter Bildung der ersten Aufschlämmung gemischt werden.

3. Verfahren nach einem vorangehenden Anspruch, wobei Kohlenhydrat zu wenigstens einer Aufschlämmung, vorzugsweise der zweiten Aufschlämmung, wie sie in Anspruch 2 beschrieben ist, gegeben wird.

4. Verfahren nach einem vorangehenden Anspruch, das außerdem den Schritt eines Unterwerfens der Aufschlämmung oder einer beliebigen oder aller Aufschlämmungen einer Wärmebehandlung, vorzugsweise in dem Bereich von 40 °C bis 80 °C, umfasst.

5. Verfahren nach einem vorangehenden Anspruch, das außerdem den Schritt eines Homogenisierens der Aufschlämmung oder einer beliebigen oder aller Aufschlämmungen umfasst.

6. Verfahren nach einem vorangehenden Anspruch, das außerdem Agglomerieren des sprühgetrockneten Produkts von Schritt (c) umfasst.

7. Verfahren nach einem vorangehenden Anspruch, wobei in Schritt (a) die erste Aufschlämmung einen pH über dem isoelektrischen Punkt des Proteins, vorzugsweise einen pH über 6, hat.

8. Verfahren nach Anspruch 2, wobei der Stabilisator in der dritten Aufschlämmung neutral ist oder negativ geladen ist.

9. Verfahren nach einem vorangehenden Anspruch, wobei die Proteinquelle ein Pflanzenprotein, Tierprotein oder Gemische davon umfasst.

10. Verfahren nach Anspruch 9, wobei das Pflanzenprotein ausgewählt wird aus Sojaprotein, Erbsenprotein und Lupinenprotein oder Gemischen davon, und/oder das Tierprotein aus Milchprotein ausgewählt wird.

11. Verfahren nach Anspruch 2, wobei die Menge an Stabilisator in der dritten Aufschlämmung 0,01 bis 20 Gew.-%, vorzugsweise 0,1 bis 20 Gew.-%, ist.

12. Verfahren nach einem vorangehenden Anspruch, wobei in Schritt (d) ein weiteres Ingrediens oder mehrere weitere Ingredienzien zu dem Gemisch von Aufschlämmung gegeben wird/werden, wobei diese Ingredienzien vorzugsweise aus Fett, Emulgatoren und organischen Säuren ausgewählt werden.

## Revendications

1. Procédé de fabrication d'une préparation en poudre utilisée pour l'obtention d'une boisson neutre ou légèrement acide, dont le pH peut varier de 5,5 à 8, suite au mélange de la préparation en poudre avec un liquide, le procédé comprenant les étapes consistant à :
(a) préparer une première suspension comprenant une source de protéines et un stabilisant polysaccharidique choisi parmi la gomme de caroube, les polysaccharides extraits de la graine de tamarin, la gomme gellane, la gomme xanthane, la gomme guar, la gomme tara, la gomme arabique, la gomme karaya, le carraghénane, l'agar, les polysaccharides extraits du soja et les mélanges de ceux-ci, ladite première suspension présentant un pH neutre ou légèrement acide pouvant varier de 5,5 à 8 ;
(b) ajuster le pH de la première suspension, si nécessaire, sur une valeur se situant dans un intervalle de 5,5 à 7,5, de préférence de 6 à 7, 5 et, de façon encore préférée, de 6 à 7 ; et
(c) sécher par pulvérisation la première suspension, dont la teneur en matière sèche est comprise entre 10 et 50 % (m/m), après l'étape (a) ou l'étape (b).

2. Procédé selon la revendication 1, dans lequel on prépare une deuxième suspension comprenant la source de protéines, ainsi qu'une troisième suspension comprenant le stabilisant, la deuxième et la troisième suspension étant ensuite mélangées pour donner ladite première suspension.

3. Procédé selon l'une quelconque des revendications précédentes, dans lequel des glucides sont ajoutés à au moins une suspension, de préférence à la deuxième suspension telle que décrite dans la revendication 2.

4. Procédé selon l'une quelconque des revendications précédentes, comprenant, en outre, une étape consistant à soumettre la suspension, ou l'une quelconque ou la totalité des suspensions, à un traitement thermique, de préférence à une température se situant dans une fourchette de 40 à 80°C.

5. Procédé selon l'une quelconque des revendications précédentes, comprenant, en outre, une étape consistant à homogénéiser la suspension ou encore l'une quelconque ou la totalité des suspensions.

6. Procédé selon l'une quelconque des revendications précédentes, comprenant, en outre, l'agglomération du produit séché par pulvérisation de l'étape (c).

7. Procédé selon l'une quelconque des revendications précédentes, dans lequel, au cours de l'étape (a), la première suspension présente un pH supérieur au point isoélectrique des protéines, de préférence un pH supérieur à 6.

8. Procédé selon la revendication 2, dans lequel le stabilisant présent dans la troisième suspension est neutre ou chargé négativement.

9. Procédé selon l'une quelconque des revendications précédentes, dans lequel la source de protéines comprend des protéines végétales, des protéines animales ou des mélanges de celles-ci.

10. Procédé selon la revendication 9, dans lequel les protéines végétales sont choisies parmi les protéines de soja, les protéines de pois ou les protéines de lupin ou encore les mélanges de celles-ci, et/ou dans lequel les protéines animales sont choisies parmi les protéines laitières.

11. Procédé selon la revendication 2, dans lequel la teneur en stabilisant de la troisième suspension peut varier de 0,01 à 20 % en poids et, de préférence, de 0,1 à 20 % en poids.

12. Procédé selon l'une quelconque des revendications précédentes, dans lequel, au cours d'une étape (d), au moins un ingrédient supplémentaire est ajouté au mélange des suspensions, ledit au moins un ingrédient étant, de préférence, choisi parmi les matières grasses, les émulsifiants et les acides organiques.
